(19) Europäisches Patentamt
European Patent Office
Office européen des brevets

(11) Veröffentlichungsnummer: **0 464 176 B1**

(12) **EUROPÄISCHE PATENTSCHRIFT**

(45) Veröffentlichungstag der Patentschrift: **12.07.95**

(51) Int. Cl.⁶: **C09K 19/34**, C09K 19/42

(21) Anmeldenummer: **91902692.2**

(22) Anmeldetag: **21.01.91**

(86) Internationale Anmeldenummer:
**PCT/EP91/00107**

(87) Internationale Veröffentlichungsnummer:
**WO 91/11497 (08.08.91 91/18)**

# (54) FLÜSSIGKRISTALLINES MEDIUM.

(30) Priorität: **23.01.90 DE 4001845**
**15.02.90 DE 4004609**
**07.03.90 DE 4007041**
**23.03.90 DE 4009367**
**30.03.90 DE 4010249**

(43) Veröffentlichungstag der Anmeldung:
**08.01.92 Patentblatt 92/02**

(45) Bekanntmachung des Hinweises auf die Patenterteilung:
**12.07.95 Patentblatt 95/28**

(84) Benannte Vertragsstaaten:
**DE GB**

(56) Entgegenhaltungen:
**EP-A- 0 123 907**
**EP-A- 0 258 868**
**EP-A- 0 395 220**
**WO-A-87/06602**
**WO-A-90/04623**

(73) Patentinhaber: **MERCK PATENT GmbH**
**Postfach,**
**Frankfurter Strasse 250**
**D-64271 Darmstadt (DE)**

(72) Erfinder: **SCHEUBLE, Bernhard**
**Grundweg 3**
**D-6104 Seeheim-Jugenheim (DE)**
Erfinder: **FINKENZELLER, Ulrich**
**Waldpfad 74**
**D-6831 Plankstadt (DE)**
Erfinder: **KURMEIER, Hans-Adolf**
**Hinter der Schule 3a**
**D-6104 Seeheim-Jugenheim (DE)**
Erfinder: **HITTICH, Reinhard**
**Am Kirchberg 11**
**D-6101 Modautal 1 (DE)**
Erfinder: **RIEGER, Bernhard, WACORE**
**Tamagawagakuen,**
**2834, Ootadaira,**
**Nara-machi**
**Midori-ku,**
**Yokohama-shi,**
**Kanagawa, pref. (JP)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 464 176 B1

**Patent Abstracts of Japan, Band 12, Nr 11, C468, Zusammenfassung von JP 62-167388, publ 1987-07-23**

**Patent Abstracts of Japan, Band 10, Nr 4, C322, Zusammenfassung von JP 60-163991, publ 1985-08-26**

**Patent Abstracts of Japan, Band 9, Nr 184, C294, Zusammenfassung von JP 60-51778, publ 1985-03-23**

Erfinder: **REIFFENRATH, Volker**
**Jahnstra e 18**
**D-6101 Ro dorf (DE)**
Erfinder: **COATES, David**
**87 Sopwith Crescent,**
**Merley**
**Wimborne,**
**Dorset BH21 3SW (GB)**
Erfinder: **POETSCH, Eike**
**Am Buchwald 4**
**D-6109 Mühltal 6 (DE)**
Erfinder: **WÄCHTLER, Andreas**
**Goethestra e 34**
**D-6103 Griesheim (DE)**

## Beschreibung

Die vorliegende Erfindung betrifft ein flüssigkristallines Medium, dessen Verwendung für elektrooptische Zwecke und dieses Medium enthaltende Anzeigen.

Flüssige Kristalle werden vor allem als Dielektrika in Anzeigevorrichtungen verwendet, da die optischen Eigenschaften solcher Substanzen durch eine angelegte Spannung beinflußt werden können. Elektrooptische Vorrichtungen auf der Basis von Flüssigkristallen sind dem Fachmann bestens bekannt und können auf verschiedenen Effekten beruhen. Derartige Vorrichtungen sind beispielsweise Zellen mit dynamischer Streuung, DAP-Zellen (Deformation aufgerichteter Phasen), Gast/Wirt-Zellen, TN-Zellen mit verdrillt nematischer ("twisted nematic") Struktur, STN-Zellen ("super-twisted nematic"), SBE-Zellen ("super-birefringence effect") und OMI-Zellen ("optical mode interference"). Die gebräuchlichsten Anzeigevorrichtungen beruhen auf dem Schadt-Helfrich-Effekt und besitzen eine verdrillt nematische Struktur.

Die Flüssigkristallmaterialien müssen eine gute chemische und thermische Stabilität und eine gute Stabilität gegenüber elektrischen Feldern und elektromagnetischer Strahlung besitzen. Ferner sollten die Flüssigkristallmaterialien niedere Viskosität aufweisen und in den Zellen kurze Ansprechzeiten, tiefe Schwellenspannungen und einen hohen Kontrast ergeben. Weiterhin sollten sie bei üblichen Betriebstemperaturen, d.h. in einem möglichst breiten Bereich unterhalb und oberhalb Raumtemperatur eine geeignete Mesophase besitzen, beispielsweise für die oben genannten Zellen eine nematische oder cholesterische Mesophase. Da Flüssigkristalle in der Regel als Mischungen mehrerer Komponenten zur Anwendung gelangen, ist es wichtig, daß die Komponenten untereinander gut mischbar sind. Weitere Eigenschaften, wie die elektrische Leitfähigkeit, die dielektrische Anisotropie und die optische Anisotropie, müssen je nach Zellentyp und Anwendungsgebiet unterschiedlichen Anforderungen genügen. Beispielsweise sollten Materialien für Zellen mit verdrillt nematischer Struktur eine positive dielektrische Anisotropie und eine geringe elektrische Leitfähigkeit aufweisen.

Beispielsweise sind für Matrix-Flüssigkristallanzeigen mit integrierten nicht-linearen Elementen zur Schaltung einzelner Bildpunkte (MFK-Anzeigen) Medien mit großer positiver dielektrischer Anisotropie, breiten nematischen Phasen, relativ niedriger Doppelbrechung, sehr hohem spezifischen Widerstand, guter UV- und Temperaturstabilität des Widerstands und geringem Dampfdruck erwünscht.

Matrix-Flüssigkristallanzeigen gemäß des Oberbegriffs sind bekannt. Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei man zwei Typen unterscheiden kann:

1. MOS (Metal Oxide Semiconductor)-Transistoren auf Silizium-Wafer als Substrat.
2. Dünnfilm-Transistoren (TFT) auf einer Glasplatte als Substrat.

Eine andere Kategorisierung ist:

(a) two-terminal devices (diode ring)
(b) three-terminal devices (TFT)

Die Verwendung von einkristallinem Silizium als Substratmaterial beschränkt die Displaygröße, da auch die modulartige Zusammensetzung verschiedener Teildisplays an den Stößen zu Problemen führt.

Bei dem aussichtsreicheren Typ 2, welcher bevorzugt ist, wird als elektrooptischer Effekt üblicherweise der TN-Effekt verwendet. Man unterscheidet zwei Technologien: TFT's aus Verbindungshalbleitern wie z.B. CdSe oder TFT's auf der Basis von polykristallinem oder amorphem Silizium. An letzterer Technologie wird weltweit mit großer Intensität gearbeitet.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, daß je ein Filterelement einem schaltbaren Bildelement gegenüber liegt.

Die TFT-Anzeigen arbeiten üblicherweise als TN-Zellen mit gekreuzten Polarisatoren in Transmission und sind von hinten beleuchtet.

Der Begriff MFK-Anzeigen umfaßt hier jedes Matrix-Display mit integrierten nicht linearen Elementen, d.h. neben der aktiven Matrix auch Anzeigen mit passiven Elementen wie Varistoren oder Dioden (MIM = Metall-Isolator-Metall).

Derartige MFK-Anzeigen eignen sich insbesondere für TV-Anwendungen (z.B. Taschenfernseher) oder für hochinformative Displays für Rechneranwendungen (Laptop) und im Automobil- oder Flugzeugbau. Neben Problemen hinsichtlich der Winkelabhängigkeit des Kontrastes und der Schaltzeiten resultieren bei MFK-Anzeigen Schwierigkeiten bedingt durch nicht ausreichend hohen spezifischen Widerstand der Flüssigkristallmischungen [TOGASHI` S., SEKIGUCHI, K., TANABE, H., YAMAMOTO, E., SORIMAXI, K.,

TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Adressing of Television Liquid Crystal Displays, p. 145 ff, Paris]. Mit abnehmendem Widerstand verschlechtert sich der Kontrast einer MFK-Anzeige und es kann das Problem der "after image elimination" auftreten. Da der spezifische Widerstand der Flüssigkristallmischung durch Wechselwirkung mit den inneren Oberflächen der Anzeige im allgemeinen über die Lebenszeit einer MFK-Anzeige abnimmt, ist ein hoher (Anfangs) -Widerstand sehr wichtig, um akzeptable Standzeiten zu erhalten. Insbesondere bei low-volt-Mischungen (Schwellenspannung $V_{10} \leqq 1{,}5$ Volt, Klärpunkt $\geqq 65\,^{\circ}C$) war es bisher nicht möglich, sehr hohe spezifische Widerstände zu realisieren. Weiterhin ist es wichtig, daß der spezifische Widerstand eine möglichst geringe Zunahme bei steigender Temperatur sowie nach Temperatur- und/oder UV-Belastung zeigt. Die MFK-Anzeigen aus dem Stand der Technik genügen nicht den heutigen Anforderungen.

Es besteht somit immer noch ein großer Bedarf nach MFK-Anzeigen mit sehr hohem spezifischen Widerstand bei gleichzeitig großem Arbeitstemperaturbereich, kurzen Schaltzeiten und niedriger Schwellenspannung, die diese Nachteile nicht oder nur in geringerem Maße zeigen.

Der Erfindung liegt die Aufgabe zugrunde, Medien insbesondere für derartige MFK-Anzeigen bereitzustellen, die die oben angegebenen Nachteile nicht oder nur in geringerem Maße, gleichzeitig sehr hohe spezifische Widerstände und niedrige Schwellenspannungen aufweisen.

Es wurde nun gefunden, daß diese Aufgabe gelöst werden kann, wenn man in diesen MFK-Anzeigen erfindungsgemäße Medien verwendet.

Gegenstand der Erfindung ist somit ein flüssigkristallines Medium auf der Basis eines Gemisches von mittelpolaren Verbindungen, dadurch gekennzeichnet, daß es eine oder mehrere Verbindungen der allgemeinen Formel I

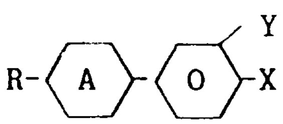 I

enthält, worin die einzelnen Reste die folgenden Bedeutungen haben:

R Alkyl, Oxaalkyl, Flüoralkyl oder Alkenyl mit jeweils bis zu 7 C-Atomen bedeutet,

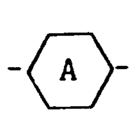 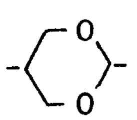 oder 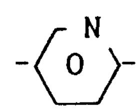,

X F, Cl, $OCHF_2$, $OCF_2Cl$ oder $OCF_3$,

Y H oder F,

und zusätzlich eine oder mehrere Verbindungen ausgewählt aus der Gruppe bestehend aus den allgemeinen Formeln II, III und IV und/oder V bis VIII enthält

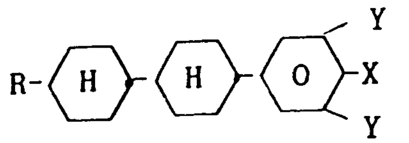

II

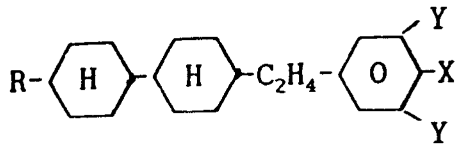

III

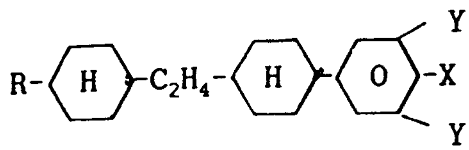

IV

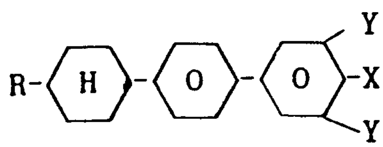

V

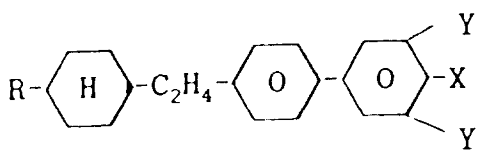

VI

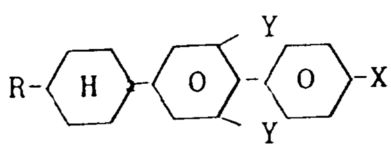

VII

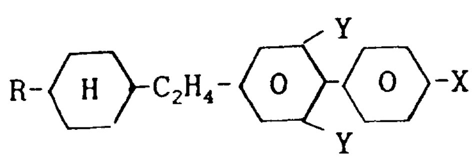

VIII

worin R, X und Y jeweils unabhängig voneinander eine der für Formel I angegebenen Bedeutung haben, wobei Medien enthaltend Verbindungen der Formel

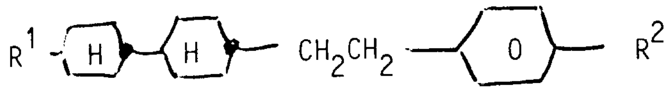

worin $R^1$ und $R^2$ jeweils unabhängig voneinander n-Alkyl, ω-Fluoralkyl oder n-Alkenyl mit bis zu 9 C-Atomen bedeuten, ausgeschlossen sind.

Gegenstand der Erfindung sind auch elektrooptische Anzeigen (insbesondere STN- oder MFK-Anzeigen mit zwei planparallelen Trägerplatten, die mit einer Umrandung eine Zelle bilden, integrierten nicht-linearen Elementen zur Schaltung einzelner Bildpunkte auf den Trägerplatten und einer in der Zelle befindlichen nematischen Flüssigkristallmischung mit positiver dielektrischer Anisotropie und hohem spezifischem Widerstand), die derartige Medien enthalten sowie die Verwendung dieser Medien für elektrooptische Zwecke.

Ähnliche flüssigkristalline Medien enthaltend Pyrimidinderivate sind aus EP-A-0 258 868 und EP-A- 0 123 907 bekannt. Ähnliche Medien mit heterocyclischen Derivaten mit einem Trifluormethylphenyl-Rest sind in WO 87/06602 beschreiben. Weitere ähnliche Medien sind schließlich in den Dokumenten JP 60-163 991, EP-A-0 395 220 und WO 90/04623 beschrieben.

Die erfindungsgemäßen Flüssigkristallmischungen ermöglichen es bei niedrigen Viskositäten gleichzeitig Schwellenspannungen vorzugsweise ≦ 1,65 Volt, Klärpunkte oberhalb 60°, vorzugsweise oberhalb 65° und/oder einen hohen Wert für den spezifischen Widerstand zu erreichen, wodurch hervorragende MKF-Anzeigen erzielt werden können. Es versteht sich, daß durch geeignete Wahl der Komponenten der erfindungsgemäßen Mischungen auch höhere Klärpunkte (z.B. oberhalb 90°) bei höheren Schwellenspannung ($V_{th}$ < 2,2 Volt) unter Erhalt der anderen vorteilhaften Eigenschaften realisiert werden können. Die erfindungsgemäßen MFK-Anzeigen arbeiten vorzugsweise im ersten Transmissionsminimum nach Gooch und Tarry [C.H. Gooch und H.A. Tarry, Electron. Lett. 10, 2-4, 1974; C.H. Gooch und H.A. Tarry, Appl. Phys., Vol. 8, 1575-1584, 1975], wobei hier neben besonders günstigen elektrooptischen Eigenschaften wie z.B. hohe Steilheit der Kennlinie und geringe Winkelabhängigkeit des Kontrastes (DE-PS 30 22 818) bei gleicher Schwellenspannung wie in einer analogen Anzeige im zweiten Minimum eine kleinerere dielektrische Anisotropie ausreichend ist. Hierdurch lassen sich unter Verwendung der erfindungsgemäßen Mischungen im ersten Minimum deutlich höhere spezifische Widerstände verwirklichen. Der Fachmann kann durch geeignete Wahl der einzelnen Komponenten und deren Gewichtsanteilen mit einfachen Routinemethoden die für eine vorgegebene Schichtdicke der MFK-Anzeige erforderliche Doppelbrechung einstellen.

Messungen des "Capacity Holding-ration" (HR) [S. Matsumoto et al., Liquid Crystals 5, 1320 (1989); K. Niwa et al., Proc. SID Conference, San Francisco, June 1984, p. 304 (1984); G. Weber et al., Liquid Crystals 5, 1381 (1989)] haben ergeben, daß erfindungsgemäße Mischungen enthaltend Verbindungen der Formel I eine deutlich kleinere Abnahme des HR mit steigender Temperatur aufweisen als analoge Mischungen enthaltend anstelle den Verbindungen der Formel I Cyanophenylcyclohexane der Formel

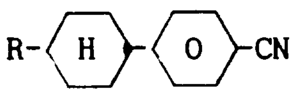

Auch die UV-Stabilität der erfindungegemäßen Mischungen ist erheblich besser, d. h. sie zeigen eine deutlich kleinere Abnahme des HR unter UV-Belastung.

Die Viskosität bei 20 °C ist vorzugsweise ≦ 25 mPa.s. Der nematische Phasenbereich ist vorzugsweise mindestens 70°, insbesondere mindestens 80°. Vorzugsweise erstreckt sich dieser Bereich mindestens von -20° bis +70°.

Die einzelnen Verbindungen der Formeln 1 bis XII und deren Unterformeln, die in den erfindungsgemäßen MFK-Anzeigen verwendet werden können, sind entweder bekannt, oder sie können analog zu den bekannten Verbindungen hergestellt werden.

Bevorzugte Ausführungsformen sind im folgenden angegeben:

- Medium enthält eine oder mehrere Verbindungen ausgewählt aus der Gruppe bestehend aus den allgemeinen Formeln II, III und IV:

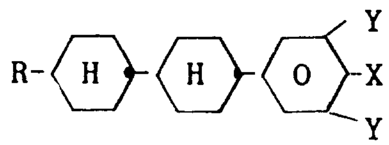

II

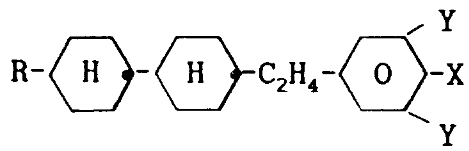

III

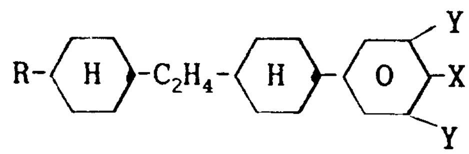

IV

worin R, X und Y jeweils unabhängig voneinander eine der in Anspruch 1 angegebene Bedeutung haben.

- Medium enthält eine oder mehrere Verbindungen ausgewählt aus der Gruppe bestehend aus den allgemeinen Formeln V bis VIII:

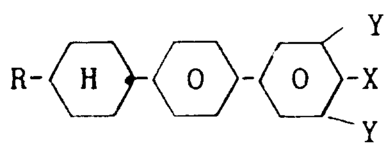

V

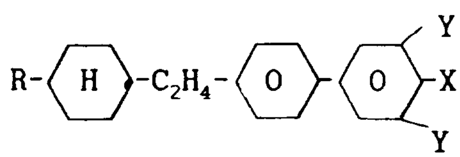

VI

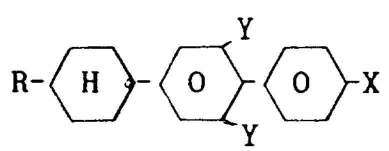

VII

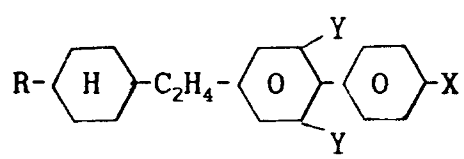

VIII

worin R, X und Y jeweils unabhängig voneinander eine der in Anspruch 1 angegebene Bedeutung haben.

- Medium enthält zusätzlich eine oder mehrere Verbindungen ausgewählt aus der Gruppe bestehend aus der allgemeinen Formeln IX bis XII:

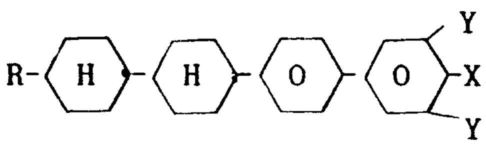

IX

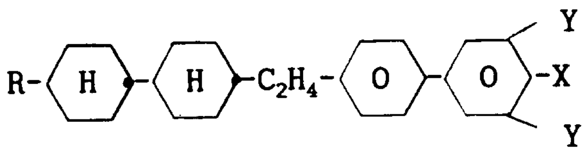

X

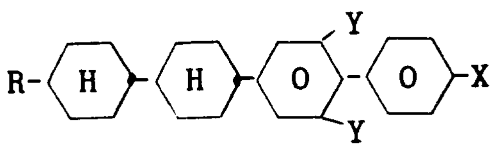

XI

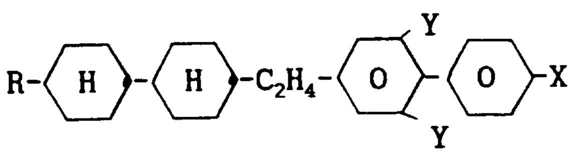

XII

worin R, X und Y jeweils unabhängig voneinander eine der in Anspruch 1 angegebene Bedeutung haben.
- Der Anteil an Verbindungen der Formeln I bis IV zusammen beträgt im Gesamtgemisch mindestens 50 Gew.-%
- der Anteil an Verbindungen der Formel I beträgt im Gesamtgemisch 10 bis 50 Gew.-%
- der Anteil an Verbindungen der Formeln II bis IV im Gesamtgemisch beträgt 40 bis 90 Gew.-% (vorzugsweise 50-70 Gew.-%)
- Y in Formel I ist H
-

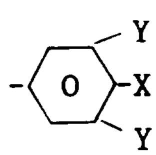 ist 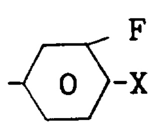 oder 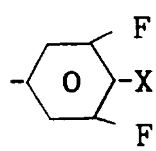

- X ist $OCF_3$, F oder Cl
- X ist $OCF_2H$
- das Medium enthält Verbindungen der Formeln II und III oder IV
- R ist geradkettiges Alkyl oder Alkenyl mit 2 bis 7 C-Atomen
- das Medium besteht im wesentlichen aus Verbindungen der Formeln I bis IV

- das Medium enthält weitere Verbindungen, vorzugsweise ausgewählt aus der folgenden Gruppe:

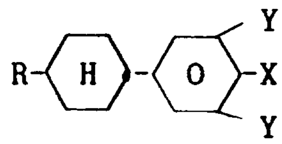

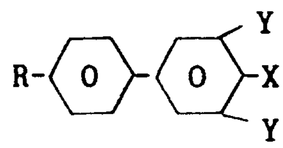

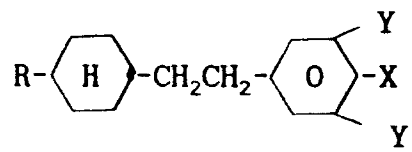

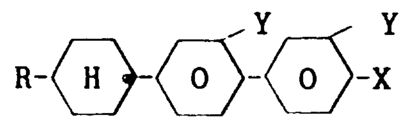

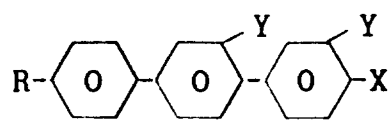

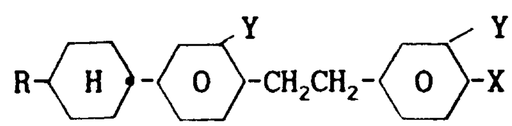

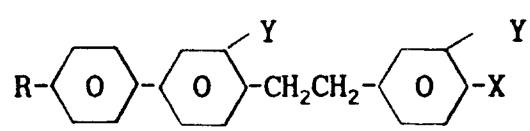

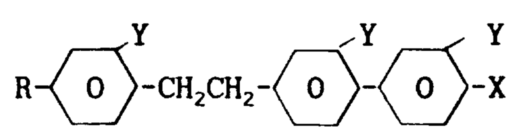

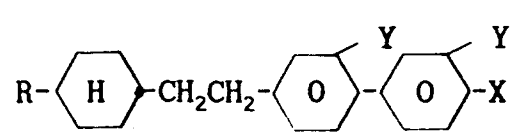

- Das Gewichtsverhältnis I: (II + III + IV) ist vorzugsweise 1 : 4 bis 1 : 1.

- Medium besteht im wesentlichen aus aus Verbindungen ausgewählt aus der Gruppe bestehend aus den allgemeinen Formeln I bis XII.
- Medium enthält eine oder mehrere Verbindungen der Formel I2, I3 und/oder I4:

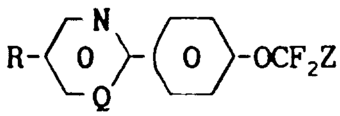

I2

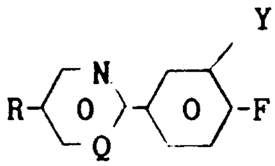

I3

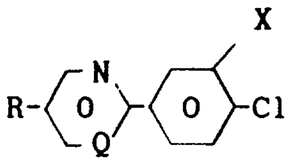

I4

worin R die angegebene Bedeutung hat, Q CH, Z F, Cl oder H und Y H oder F bedeutet.

Es wurde gefunden, daß bereits ein relativ geringer Anteil an Verbindungen der Formel I im Gemisch mit einer oder mehreren Verbindungen der Formel II, III und/oder IV zu einer beträchtlichen Verbesserung der Ansprechzeiten und zu niedrigen Schwellenspannungen führt, wobei gleichzeitig breite nematische Phasen mit tiefen Übergangstemperaturen smektisch-nematisch beobachtet werden. Die Verbindungen der Formeln I bis IV sind farblos, stabil und untereinander und mit anderen Flüssigkristallmaterialien gut mischbar.

Der Ausdruck "Alkyl" umfaßt geradkettige und verzweigte Alkylgruppen mit 1-7 Kohlenstoffatomen, insbesondere die geradkettigen Gruppen Methyl, Ethyl, Propyl, Butyl, Pentyl, Hexyl und Heptyl. Gruppen mit 2-5 Kohlenstoffatomen sind im allgemeinen bevorzugt.

Der Ausdruck "Alkenyl" umfaßt geradkettige und verzweigte Alkenylgruppen mit 2-7 Kohlenstoffatomen, insbesondere die geradkettigen Gruppen. Besonders Alkenylgruppen sind $C_2$-$C_7$-1E-Alkenyl, $C_4$-$C_7$-3E-Alkenyl, $C_5$-$C_7$-4-Alkenyl, $C_6$-$C_7$-5-Alkenyl und $C_7$-6-Alkenyl, insbesondere $C_2$-$C_7$-1E-Alkenyl, $C_4$-$C_7$-3E-Alkenyl und $C_5$-$C_7$-4-Alkenyl. Beispiele bevorzugter Alkenylgruppen sind Vinyl, 1E-Propenyl, 1E-Butenyl, 1E-Pentenyl, 1E-Hexenyl, 1E-Heptenyl, 3-Butenyl, 3E-Pentenyl, 3E-Hexenyl, 3E-Heptenyl, 4-Pentenyl, 4Z-Hexenyl, 4E-Hexenyl, 4Z-Heptenyl, 5-Hexenyl, 6-Heptenyl und dergleichen. Gruppen mit bis zu 5 Kohlenstoffatomen sind im allgemeinen bevorzugt.

Der Ausdruck "Fluoralkyl" umfaßt vorzugsweise geradkettige Gruppen mit endständigen Fluor, d.h. Fluormethyl, 2-Fluorethyl, 3-Fluorpropyl, 4-Fluorbutyl, 5-Fluorpentyl, 6-Fluorhexyl und 7-Fluorheptyl. Andere Positionen des Fluors sind jedoch nicht ausgeschlossen.

Der Ausdruck "Oxaalkyl" umfaßt vorzugsweise geradkettige Reste der Formel $C_nH_{2n+1}$-O-$(CH_2)_m$, worin n und m jeweils unabhängig voneinander 1 bis 6 bedeuten. Vorzugsweise ist n = 1 und m 1 bis 6.

Durch geeignete Wahl der Bedeutungen von R, X und Y können die Ansprechzeiten, die Schwellenspannung, die Steilheit der Transmissionskennlinien etc. in gewünschter Weise modifiziert werden. Beispielsweise führen 1E-Alkenylreste, 3E-Alkenylreste, 2E-Alkenyloxyreste und dergleichen in der Regel zu kürzeren Ansprechzeiten, verbesserten nematischen Tendenzen und einem höheren Verhältnis der elastischen Konstanten $k_{33}$ (bend) und $k_{11}$ (splay) im Vergleich zu Alkyl- bzw. Alkoxyresten. 4-Alkenylreste, 3-Alkenylreste und dergleichen ergeben im allgemeinen tiefere Schwellenspannungen und kleinere Werte von $k_{33}/k_{11}$ im Vergleich zu Alkyl- und Alkoxyresten. Eine Gruppe $-CH_2CH_2-$ in $Z^1$ bzw. $Z^2$ führt im allgemeinen zu höheren Werte von $k_{33}/k_{11}$ im Vergleich zu einer einfachen Kovalenzbindung. Höhere Werte von $k_{33}/k_{11}$ ermöglichen z.B. flachere Transmissionskennlinien in TH-Zellen mit 90° Verdrillung (zur Erzielung von Grautönen) und steilere Transmissionskennlinien in STN-, SBE- und OMI-Zellen (höhere Multiplexierbarkeit) und umgekehrt

Das optimale Mengenverhältnis der Verbindungen der Formeln I und II + III + IV hängt weitgehend von den gewünschten Eigenschaften, von der Wahl der Komponenten der Formeln I, II, III und/oder IV und von der Wahl weiterer gegebenenfalls vorhandener Komponenten ab. Geeignete Mengenverhältnisse innerhalb des oben angegebenen Bereichs können von Fall zu Fall leicht ermittelt werden.

Die Gesamtmenge an Verbindungen der Formeln I bis XII in den erfindungsgemäßen Gemischen ist nicht kritisch. Die Gemische können daher eine oder mehrere weitere Komponenten enthalten zwecks Optimierung verschiedener Eigenschaften. Der beobachtete Effekt auf die Ansprechzeiten und die Schwellenspannung ist jedoch in der Regel umso größer je höher die Gesamtkonzentration an Verbindungen der Formeln I bis XII ist.

Die erfindungegemäßen Gemischen enthalten vorzugsweise eine oder mehrere Verbindungen der Formel Ia. Die Gesamtmenge an Verbindungen der Formel Ia im Gemisch beträgt vorzugsweise mindestens 10 Gew.-%, besonders bevorzugt mindestens 15 Gew.-%

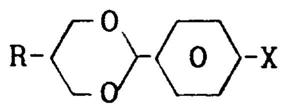

Ia

(X ist vorzugsweise F oder Cl, insbesondere F.)

Die erfindungsgemäßen Gemische enthalten vorzugsweise eine oder mehrere Verbindungen der Formel Ic.

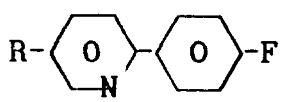

Ic

Die erfindungsgemäßen Gemische enthalten vorzugsweise eine oder mehrere Verbindungen der Formel Ie. Die Gesamtmenge an Verbindungen der Formel Ie im Gemisch beträgt vorzugsweise mindestens 10 Gew.-%, besonders bevorzugt mindestens 15 Gew.-%.

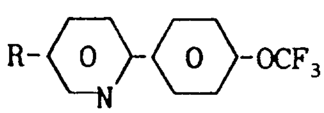

Ie

Die erfindungsgemäßen Medien können ferner eine Komponente A enthalten bestehend aus einer oder mehreren Verbindungen mit einer dielektrischen Anisotropie von -1,5 bis +1,5 der allgemeinen Formel I'

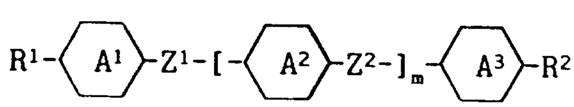

I'

worin

$R^1$ und $R^2$ jeweils unabhängig voneinander n-Alkyl, ω-Fluoralkyl oder n-Alkenyl mit bis zu 9 C-Atomen,

die Ringe $A^1$, $A^2$ und $A^3$ jeweils unabhängig voneinander 1,4-Phenylen, 2- oder 3-Fluor-1,4-phenylen, trans-1,4-Cyclohexylen oder 1,4-Cyclohexenylen,

$Z^1$ und $Z^2$ jeweils unabhängig voneinander $-CH_2CH_2-$oder eine Einfachbindung,

und

m 0, 1 oder 2 bedeutet.

Komponente A enthält vorzugsweise eine oder mehrere Verbindungen ausgewählt aus der Gruppe bestehend aus II1 bis II7:

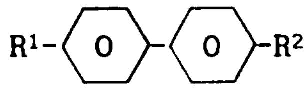

II1

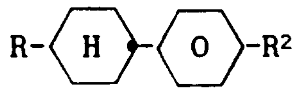

II2

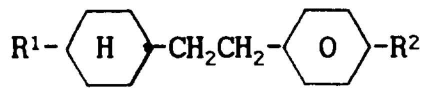

II3

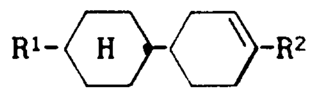

II4

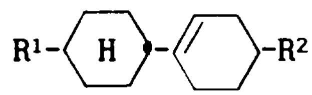

II5

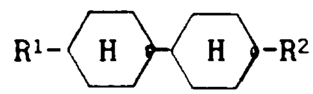

II6

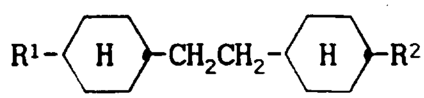

II7

worin $R^1$ und $R^2$ die bei Formel I' angegebene Bedeutung haben. Vorzugsweise enthält Komponente A zusätzlich eine oder mehrere Verbindungen ausgewählt aus der Gruppe bestehend aus II8 bis II20:

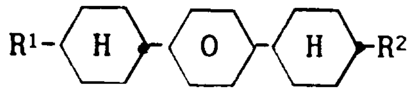

II8

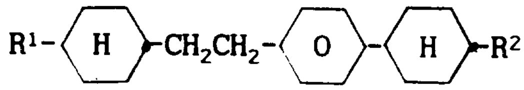

II9

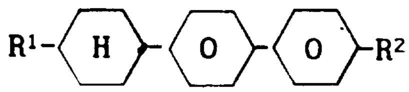

II10

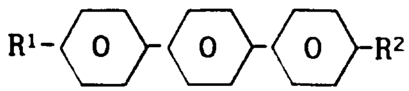

II11

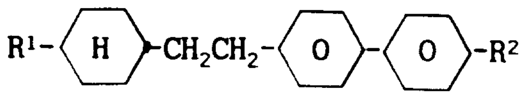

II12

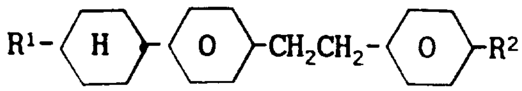

II13

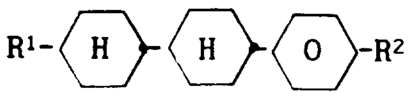

II14

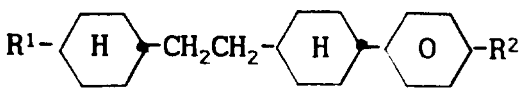

II15

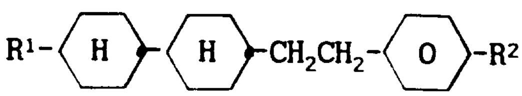

II16

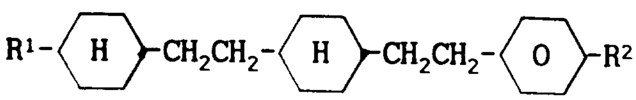

II17

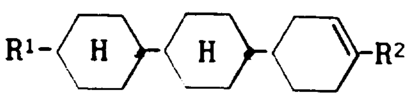

II18

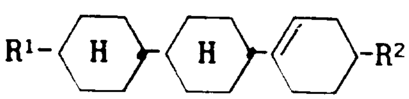

II19

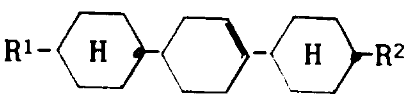

II20

worin $R^1$ und $R^2$ die bei Formel I' angegebene Bedeutung haben und die 1,4-Phenylengruppen in II8 bis II17 jeweils unabhängig voneinander auch durch Fluor ein- oder mehrfach substituiert sein können.

Ferner enthält Komponente A vorzugsweise zusätzlich eine oder mehrere Verbindungen ausgewählt aus der Gruppe bestehend aus II21 bis II25 enthält:

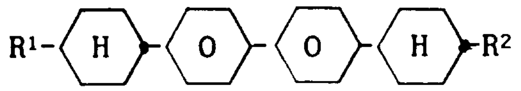

II21

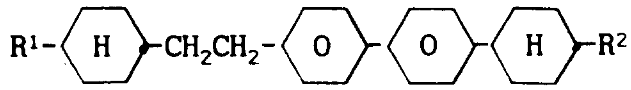

II22

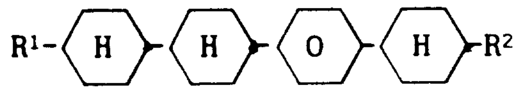

II23

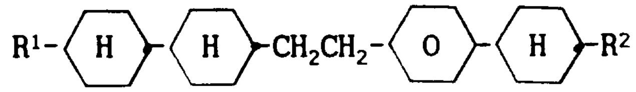

II24

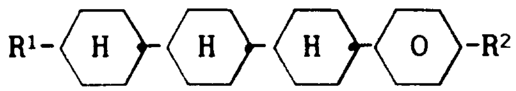

II25

worin $R^1$ und $R^2$ die bei Formel I' angegebene Bedeutung haben und die 1,4-Phenylengruppen in II21 bis II25 jeweils unabhängig voneinander auch durch Fluor ein- oder mehrfach substituiert sein können.

Schließlich sind derartige Mischungen bevorzugt, deren Komponente A eine oder mehrere Verbindungen ausgewählt aus der Gruppe bestehend aus II26 und II27 enthält:

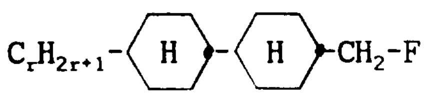

II26

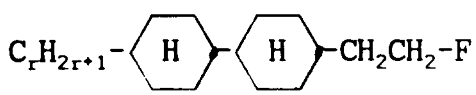

II27

worin $C_rH_{2r+1}$ eine geradkettige Alkylgruppe mit bis zu 7 C-Atomen ist.

In einigen Fällen erweist sich der Zusatz von Verbindungen der Formel

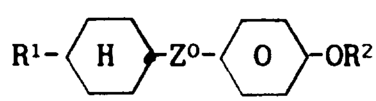

worin

$R^1$ und $R^2$ die bei Formel I' angegebene Bedeutung haben

und

$Z^0$ eine Einfachbindung, $-CH_2CH_2-$,

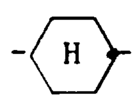 oder

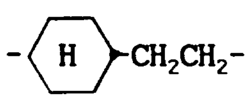

bedeutet,

zur Unterdrückung smektischer Phasen als vorteilhaft, obwohl hierdurch der spezifische Widerstand erniedrigt werden kann. Zur Erzielung von für die Anwendung optimaler Parameterkombinationen kann der

Fachmann leicht feststellen, ob und falls ja in welcher Menge diese Verbindungen zugesetzt sein können. Normalerweise werden weniger als 15 %, insbesondere 5-10 % verwendet.

Ferner bevorzugt sind Flüssigkristallmischungen, die eine oder mehrere Verbindungen ausgewählt aus der Gruppe bestehend aus III' und IV' enthalten:

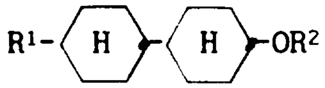

III'

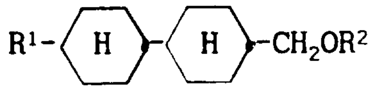

IV'

worin $R^1$ und $R^2$ die bei Formel I' angegebene Bedeutung haben.

Der Aufbau der erfindungsgemäßen MFK-Anzeige aus Polarisatoren, Elektrodengrundplatten und Elektroden mit Oberflächenbehandlung entspricht der für derartige Anzeigen üblichen Bauweise. Dabei ist der Begriff der üblichen Bauweise hier weit gefaßt und umfaßt auch alle Abwandlungen und Modifikationen der MFK-Anzeige, insbesondere auch Matrix-Anzeigeelemente auf Basis poly-Si TFT oder MIM.

Ein wesentlicher Unterschied der erfindungsgemäßen Anzeigen zu den bisher üblichen auf der Basis der verdrillten nematischen Zelle besteht jedoch in der Wahl der Flüssigkristallparameter der Flüssigkristallschicht.

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Die Dielektrika können auch weitere, dem Fachmann bekannte und in der Literatur beschriebene Zusätze enthalten. Beispielsweise können 0-15 % pleochroitische Farbstoffe oder chirale Dotierstoffe zugesetzt werden.

C bedeutet eine kristalline, S eine smektische, $S_B$ eine smektisch B, N eine nematische und I die isotrope Phase. $V_{10}$ bezeichnet die Spannung für 10 % Transmission (Blickrichtung senkrecht zur Plattenoberfläche). $t_{on}$ bezeichnet die Einschaltzeit und $t_{off}$ die Ausschaltzeit bei einer Betriebsspannung entsprechend dem 2,5-fachen Wert von $V_{10}$. Δn bezeichnet die optische Anisotropie und $n_o$ den Brechungsindex. $\Delta\epsilon$ bezeichnet die dielektrische Anisotropie ($\Delta\epsilon = \epsilon_\| - \epsilon_\perp$), wobei $\epsilon_\|$ die Dielektrizitätskonstante parallel zu den Moleküllängsachsen und $\epsilon_\perp$ die Dielektrizitätskonstante senkrecht dazu bedeutet. Die elektrooptischen Daten wurden in einer TN-Zelle im 1. Minimum (d.h. bei einem d . Δn-Wert von 0,5) bei 20 °C gemessen, sofern nicht ausdrücklich etwas anderes angegeben wird. Die optischen Daten wurden bei 20 °C gemessen, sofern nicht ausdrücklich etwas anderes angegeben wird.

Die folgenden Beispiele sollen die Erfindung erläutern, ohne sie zu begrenzen. Vor und nachstehend sind alle Temperaturen in °C angegeben. Die Prozentzahlen sind Gewichtsprozente.

In der vorliegenden Anmeldung und in den folgenden Beispielen sind die Strukturen der Flüssigkristallverbindungen durch Acronyme angegeben, wobei die Transformation in chemische Formeln gemäß folgender Tabellen A und B erfolgt. Alle Rest $C_nH_{2n+1}$ und $C_mH_{2m+1}$ sind geradkettige Alkylreste mit n bzw. m C-Atomen. Die Codierung gemäß Tabelle B versteht sich von selbst. In Tabelle A ist nur das Acronym für den Grundkörper angegeben. Im Einzelfall folgt getrennt vom Acronym für den Grundkörper mit einem Strich ein Code für die Sübstituenten $R^1$, $R^2$, $L^1$ und $L^2$:

| Code für $R^1$, $R^2$, $L^1$, $L^2$, | $R^1$ | $R^2$ | $L^1$ | $L^2$ |
|---|---|---|---|---|
| nm | $C_nH_{2n+1}$ | $C_mH_{2m+1}$ | H | H |
| nOm | $C_nH_{2n+1}$ | $OC_mH_{2m+1}$ | H | H |
| nO.m | $OC_nH_{2n+1}$ | $C_mH_{2m+1}$ | H | H |
| n | $C_nH_{2n+1}$ | CN | H | H |
| nN.F | $C_nH_{2n+1}$ | CN | H | F |
| nF | $C_nH_{2n+1}$ | F | H | H |
| nOF | $OC_nH_{2n+1}$ | F | H | H |
| nCl | $C_nH_{2n+1}$ | Cl | H | H |
| nF.F | $C_nH_{2n+1}$ | F | H | F |
| nOmFF | $C_nH_{2n+1}$ | $OC_mH_{2m+1}$ | F | F |
| nmF | $C_nH_{2n+1}$ | $C_mH_{2m+1}$ | F | H |
| $nCF_3$ | $C_nH_{2n+1}$ | $CF_3$ | H | H |
| $nOCF_3$ | $C_nH_{2n+1}$ | $OCF_3$ | H | H |
| $nOCF_2$ | $C_nH_{2n+1}$ | $OCHF_2$ | H | H |
| nS | $C_nH_{2n+1}$ | NCS | H | H |
| rVsN | $C_rH_{2r+1}$-CH = CH-$C_sH_{2s}$- | CN | H | H |
| rEsN | $C_rH_{2r+1}$-O-$C_sH_{2s}$- | CN | H | H |
| nNF | $C_nH_{2n+1}$ | CN | F | H |
| nAm | $C_nH_{2n+1}$ | $COOC_mH_{2m+1}$ | H | H |

Tabelle A:

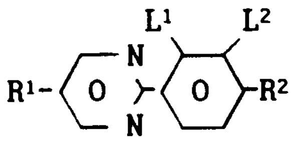

PYP

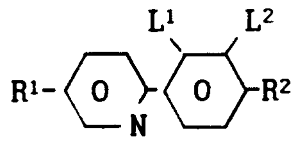

PYRP

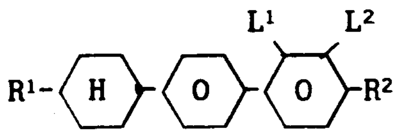

BCH

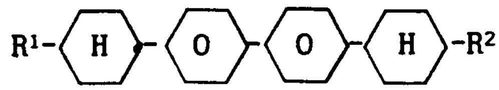

CBC

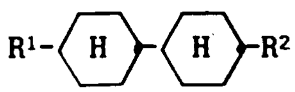

CCH

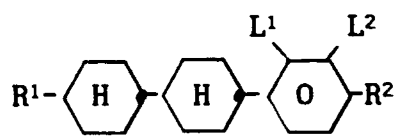

CCP

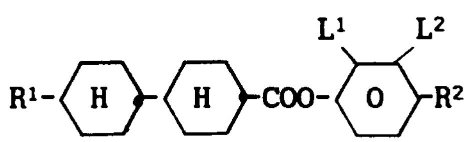

CP

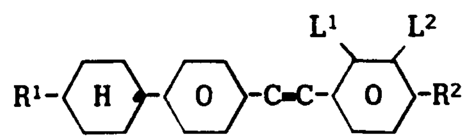

CPTP

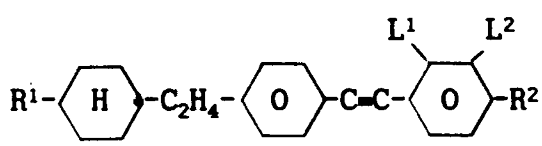

CEPTP

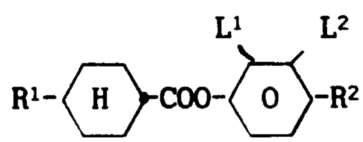

D

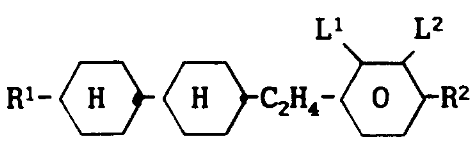

ECCP

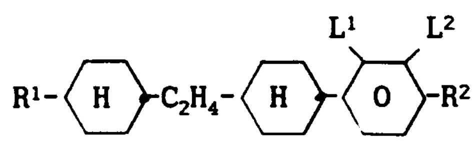

CECP

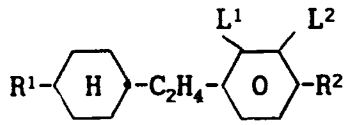

EPCH

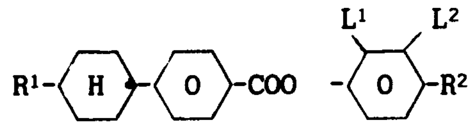

HP

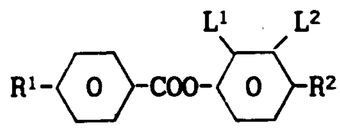

ME

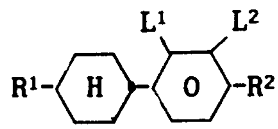

PCH

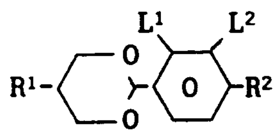

PDX

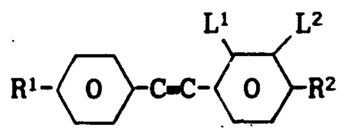

PTP

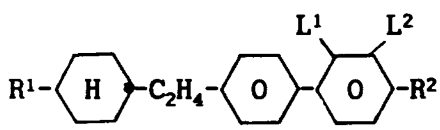

BECH

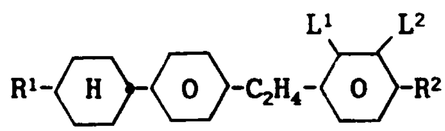

EBCH

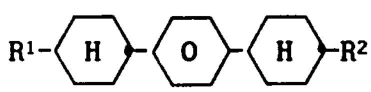

CPC

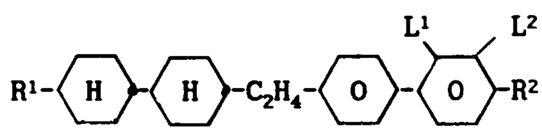

CCEB

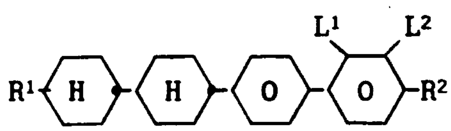

CCB

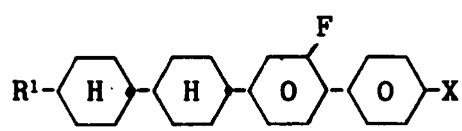

CCB-n.FX

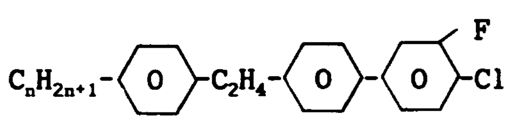

BEP-nCl.F

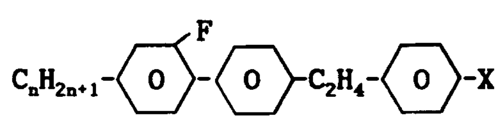

FET-nX

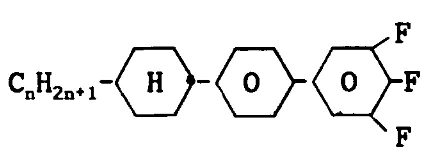

BCH-nF.F.F

Tabelle B:

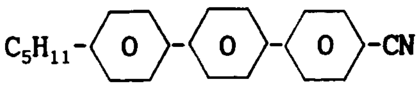

T15

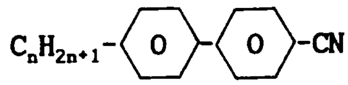

K3n

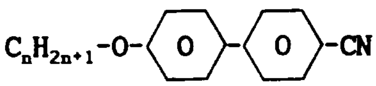

M3n

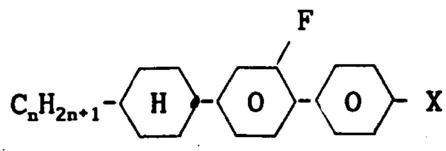

BCH-n.FX

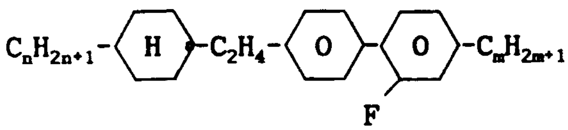

Inm

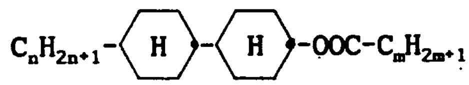

C-nm

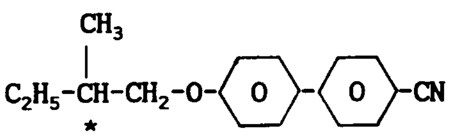

C15

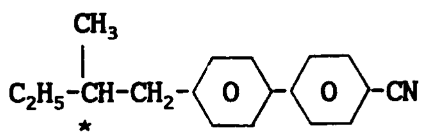

CB15

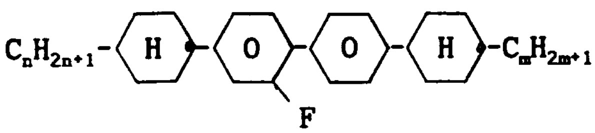

CBC-nmF

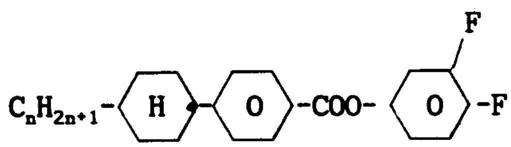

EHP-nF.F

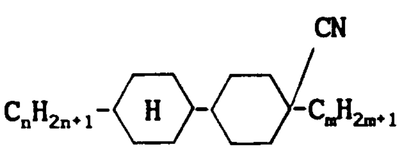

CCN-nm

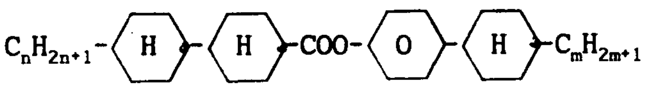

CCPC-nm

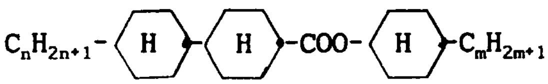

CH-nm

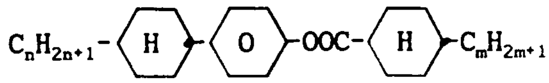

HD-nm

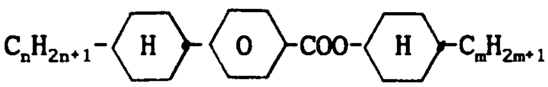

HH-nm

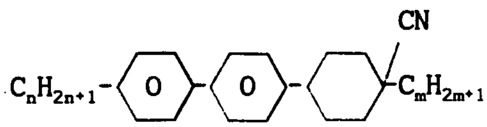

NCB-nm

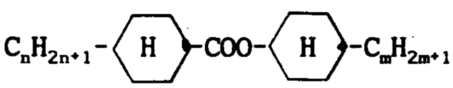

OS-nm

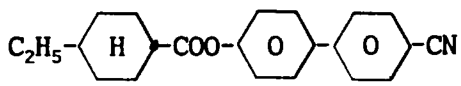

CHE

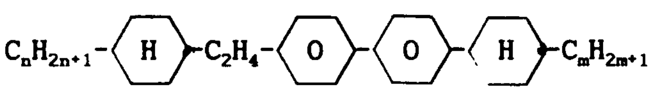

ECBC-nm

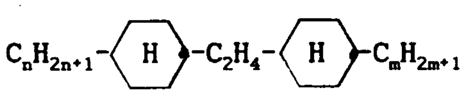

ECCH-nm

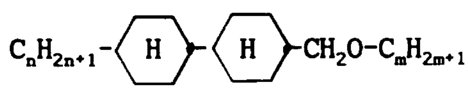

CCH-n1Em

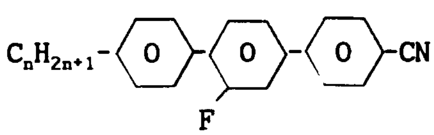

T-nFn

Die erfindungegemäßen flüssigkristallinen Medien enthalten vorzugsweise neben einer oder mehreren erfindungegemäßen Verbindungen als weitere Bestandteile 2 bis 40, insbesondere 4 bis 30 Komponenten. Ganz besonders bevorzugt enthalten diese Medien neben einer oder mehreren erfindungsgemäßen Verbindungen 7 bis 25 Komponenten. Diese weiteren Bestandteile werden vorzugsweise ausgewählt aus nematischen oder nematogenen (monotropen oder isotropen) Substanzen, insbesondere Substanzen aus den Klassen der Biphenyle, Terphenyle, Phenylcyclohexane, Cyclohexylbiphenyle, Phenylcyclohexylcyclohexane, Cyclohexylcyclohexane, Cyclohexylcyclohexene, Cyclohexylcyclohexylcyclohexene, 1,4-Bis-cyclohexylbenzole, 4,4'-Bis-cyclohexylbiphenyle, Phenyl- oder Cyclohexylpyrimidine, Phenyl- oder Cyclohexylpyridine, Phenyl- oder Cyclohexyldioxane, Phenyl- oder Cyclohexyl-1,3-dithiane, 1,2-Dicyclohexylethane, 1-Phenyl-2-cyclo-hexylethane, 1-Cyclohexyl-2(4-phenyl-cyclohexyl)-ethane, 1-Cyclohexyl-2-biphenylylethane, 1-Phenyl-2-cyclohexylphenylethane und Tolane. Die 1,4-Phenylengruppen in diesen Verbindungen können auch fluoriert sein.

Die wichtigsten als weitere Bestandteile erfindungsgemäßer Medien in Frage kommenden Verbindungen lassen sich durch die Formeln 1, 2 und 3 charakterisieren:

R'-L-E-R''    1

R'-L-$CH_2CH_2$-E-R''    2

R'-L-C≡C-E-R''    3

In den Formeln 1, 2 und 3 bedeuten L und E, die gleich oder verschieden sein können, jeweils unabhängig voneinander einen bivalenten Rest aus der aus -Phe-, -Cyc-, -Phe-Phe-, -Phe-Cyc-, -Cyc-Cyc-, -Pyr-, -Dio-, -G-Phe- und -G-Cyc- sowie deren Spiegelbilder gebildeten Gruppe, wobei Phe unsubstituiertes oder durch Fluor substituiertes 1,4-Phenylen, Cyc trans-1,4-Cyclohexylen oder 1,4-Cyclohexenylen, Pyr Pyrimidin-2,5-diyl oder Pyridin-2,5-diyl, Dio 1,3-Dioxan-2,5-diyl und G 2-(trans-1,4-Cyclohexyl)-ethyl, Pyrimidin-2,5-diyl, Pyridin-2,5-diyl oder 1,3-Dioxan-2,5-diyl bedeuten.

Vorzugsweise ist einer der Reste L und E Cyc, Phe oder Pyr. E ist vorzugsweise Cyc, Phe oder Phe-Cyc. Vorzugsweise enthalten die erfindungsgemäßen Medien eine oder mehrere Komponenten ausgewählt aus den Verbindungen der Formeln 1, 2, 3, 4 und 5, worin L und E ausgewählt sind aus der Gruppe Cyc, Phe und Pyr und gleichzeitig eine oder mehrere Komponenten ausgewählt aus den Verbindungen der Formeln 1, 2, 3, 4 und 5, worin einer der Reste L und E ausgewählt ist aus der Gruppe Cyc, Phe und Pyr und der andere Rest ausgewählt ist aus der Gruppe -Phe-Phe-, -Phe-Cyc-, -Cyc-Cyc-, -G-Phe- und -G-Cyc-, und gegebenenfalls eine oder mehrere Komponenten ausgewählt aus den Verbindungen der Formeln 1, 2, 3, 4 und 5, worin die Reste L und E ausgewählt sind aus der Gruppe -Phe-Cyc-, -Cyc-Cyc-, -G-Phe- und -G-Cyc-.

R' und R'' bedeuten in den Verbindungen der Teilformeln 1a, 2a und 3a jeweils unabhängig voneinander Alkyl, Alkenyl, Alkoxy, Alkenyloxy oder Alkanoyloxy mit bis zu 8 Kohlenstoffatomen. Bei den meisten dieser Verbindungen sind R' und R'' voneinander verschieden, wobei einer dieser Reste meist Alkyl oder Alkenyl ist. In den Verbindungen der Teilformeln 1b, 2b und 3b bedeutet R'' $OCF_3$, $-CF_3$, $OCHF_2$, F, Cl oder -NCS; R hat dabei die bei den Verbindungen der Teilformeln 1a bis 3a angegebene Bedeutung und ist vorzugsweise Alkyl oder Alkenyl. Aber auch andere Varianten der vorgesehenen Substituenten in den Verbindungen der Formeln 1, 2 und 3 sind gebräuchlich. Viele solcher Substanzen oder auch Gemische davon sind im Handel erhältlich. Alle diese Substanzen sind nach literaturbekannten Methoden oder in Analogie dazu erhältlich.

Die erfindungsgemäßen Medien können neben Komponenten aus der Gruppe der Verbindungen 1a, 2a und 3a (Gruppe 1) auch Komponenten aus der Gruppe der Verbindungen 1b, 2b und 3b (Gruppe 2) enthalten, deren Anteile vorzugsweise wie folgt sind:

Gruppe 1:    20 bis 90 %, insbesondere 30 bis 90 %,
Gruppe 2:    10 bis 80 %, insbesondere 10 bis 50 %,

wobei die Summe der Anteile der erfindungsgemäßen Verbindungen und der Verbindungen aus den Gruppen 1 und 2 bis zu 100 % ergeben. Besonders bevorzugt sind Medien, die neben erfindungsgemäßen Verbindungen nur Komponenten aus der Gruppe 2 enthalten.

Die erfindungegemäßen Medien enthalten vorzugsweise 1 bis 40 %, insbesondere vorzugsweise 5 bis 30 % an erfindungsgemäßen Verbindungen. Weiterhin bevorzugt sind Medien, enthaltend mehr als 40 %, insbesondere 45 bis 90 % an erfindungegemäßen Verbindungen. Die Medien enthalten vorzugsweise drei, vier oder fünf erfindungsgemäße Verbindungen.

Der Aufbau der erfindungsgemäßen MFK-Anzeige aus Polarisatoren, Elektrodengrundplatten und Elektroden mit Oberflächenbehandlung entspricht der für derartige Anzeigen üblichen Bauweise. Dabei ist der Begriff der üblichen Bauweise hier weit gefaßt und umfaßt auch alle Abwandlungen und Modifikationen der MFK-Anzeige, insbesondere auch Matrix-Anzeigeelemente auf Basis poly-Si TFT oder MIM.

Ein wesentlicher Unterschied der erfindungegemäßen Anzeigen zu den bisher üblichen auf der Basis der verdrillten nematischen Zelle besteht jedoch in der Wahl der Flüssigkristallparameter der Flüssigkristallschicht.

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Die Dielektrika können auch weitere, dem Fachmann bekannt und in der Literatur beschriebene Zusätze enthalten. Beispielsweise können 0-15 % pleochroitische Farbstoffe oder chirale Dotierstoffe zugesetzt werden.

C bedeutet eine kristalline, S eine smektische, $s_B$ eine smektisch B, H eine nematische und I die isotrope Phase. $T_c$ ist der Klärpunkt N-I in °C. $\eta$ ist die Fließviskosität in mPa.s. $V_{10}$ bezeichnet die Spannung für 10 % Transmission (Blickrichtung senkrecht zur Plattenoberfläche). $t_{on}$ bezeichnet die Einschaltzeit und $t_{off}$ die Ausschaltzeit bei einer Betriebsspannung entsprechend dem 2,5-fachen Wert von $V_{10}$. $\Delta n$ bezeichnet die optische Anisotropie (589 nm, 20 °C) und $n_o$ den Brechungsindex. $\Delta\epsilon$ bezeichnet die dielektrische Anisotropie ($\Delta\epsilon = \epsilon_\parallel - \epsilon_\perp$), wobei $\epsilon_\parallel$ die Dielektrizitätskonstante parallel zu den Moleküllängsachsen und $\epsilon_\perp$ die Dielektrizitätskonstante senkrecht dazu bedeutet. Die elektrooptischen Daten wurden in einer TN-Zelle mit einem Plattenabstand von 6 $\mu$m bei 20 °C gemessen, sofern nicht ausdrücklich etwas anderes angegeben wird. Die optischen Daten wurden bei 20 °C gemessen, sofern nicht ausdrücklich etwas anderes angegeben wird. $V_{th}$ ist die Schwellenspannung $V_{(10,0,20)}$ in Volt.

Die folgenden Beispiele sollen die Erfindung erläutern, ohne sie zu begrenzen. Vor und nachstehend sind alle Temperaturen in °C angegeben. Die Prozentzahlen sind Gewichtsprozente.

Beispiel 1

| | |
|---|---|
| PDX-3F | 15 % |
| PDX-5F | 13 % |
| PYP-5F | 13 % |
| CCP-2OCF$_3$ | 8 % |
| CCP-3OCF$_3$ | 13 % |
| CCP-4OCF$_3$ | 5 % |
| CCP-5OCF$_3$ | 12 % |
| ECCP-3F.F | 13 % |
| ECCP-3OCF$_3$ | 8 % |

Beispiel 2

| | |
|---|---|
| PDX-3Cl | 10 % |
| PDX-3F.F | 11 % |
| PCH-5F | 14 % |
| CCP-2OCF$_3$ | 11 % |
| CCP-3OCF$_3$ | 14 % |
| CCP-4OCF$_3$ | 7 % |
| CCP-5OCF$_3$ | 12 % |
| ECCP-3F.F | 13 % |
| ECCP-3OCF$_3$ | 8 % |

Beispiel 3

| | | | |
|---|---|---|---|
| PDX-5F<br>PCH-5F<br>$CCP-20CF_3$<br>$CCP-30CF_3$<br>$CCP-40CF_3$<br>$CCP-50CF_3$<br>BCH-3F.F<br>BCH-5F.F<br>ECCP-2F.F | 15,5<br>14,6<br>7,8<br>12,6<br>4,8<br>11,6<br>11,6<br>13,6<br>7,8 | Klärpunkt [°C]<br>Δn (589 nm, 20 °C)<br>$n_e$ (589 nm, 20 °C)<br>$V_{(10,0,20)}$ | 65,5<br>0,0868<br>1,5675<br>1,66 |

Beispiel 4

| | | | |
|---|---|---|---|
| PDX-5F.F<br>PCH-5F<br>$CCP-20CF_3$<br>$CCP-30CF_3$<br>$CCP-40CF_3$<br>$CCP-50CF_3$<br>BCH-3F.F<br>BCH-5F.F<br>ECCP-2F.F | 16,0<br>12,0<br>8,0<br>13,0<br>5,0<br>12,0<br>12,0<br>14,0<br>8,0 | Klärpunkt [°C]<br>Δn (589 nm, 20 °C)<br>$n_e$ (589 nm, 20 °C)<br>$V_{(10,0,20)}$ | 64,2<br>0,0774<br>1,5689<br>1,50 |

Beispiel 5

| | | | |
|---|---|---|---|
| PDX-3CL.F<br>PCH-5F<br>$CCP-20CF_3$<br>$CCP-30CF_3$<br>$CCP-40CF_3$<br>$CCP-50CF_3$<br>BCH-3F.F<br>BCH-5F.F<br>ECCP-2F.F | 16,0<br>12,0<br>8,0<br>13,0<br>5,0<br>12,0<br>12,0<br>14,0<br>8,0 | Klärpunkt [°C}<br>Δn (589 nm, 20 °C)<br>$n_e$ (589 nm, 20 °C)<br>$V_{(10,0,20)}$ | 66,6<br>0,0934<br>1,4819<br>1,46 |

Beispiel 6

| | | | |
|---|---|---|---|
| PDX-5F.F | 16,3 | Klärpunkt [°C] | 66,4 |
| PDX-5F | 10,2 | Δn (589 nm, 20 °C) | 0,0886 |
| CCP-20CF$_3$ | 8,2 | $n_e$ (589 nm, 20 °C) | 1,5671 |
| CCP-30CF$_3$ | 13,3 | $V_{(10,0,20)}$ | 1,56 |
| CCP-40CF$_3$ | 5,1 | | |
| CCP-50CF$_3$ | 12,2 | | |
| BCH-3F.F | 12,2 | | |
| BCH-5F.F | 14,3 | | |
| ECCP-2F.F | 8,2 | | |

Beispiel 7

| | | | |
|---|---|---|---|
| PDX-5F.F | 10,0 | Klärpunkt [°C] | 91,3 |
| PDX-5F | 10,0 | Viskosität [mm$^2$s$^{-1]}$ 20° | 16,8 |
| PCH-7F | 10,0 | Δn (589 nm, 20 °C) | 0,0840 |
| CCP-30CF$_3$ | 13,0 | $n_e$ (589 nm, 20 °C) | 1,5615 |
| CCP-50CF$_3$ | 12,0 | Δε (1 kHz, 20 °C) | 5,6 |
| ECCP-30CF$_3$ | 10,0 | $\epsilon_{\parallel}$ (1 kHz, 20 °C) | 9,3 |
| ECCP-3F.F | 13,0 | $V_{(10,0,20)}$ | 2,11 |
| ECCP-5F.F | 10,0 | | |
| CBC-33 | 4,0 | | |
| CBC-53F | 4,0 | | |
| CBC-55F | 4,0 | | |

Beispiel 8

| | |
|---|---|
| PYP-30CF$_3$ | 15 % |
| PYP-50CF$_3$ | 13 % |
| PYRP-30CF$_3$ | 13 % |
| CCP-20CF$_3$ | 8 % |
| CCP-30CF$_3$ | 13 % |
| CCP-40CF$_3$ | 5 % |
| CCP-50CF$_3$ | 12 % |
| ECCP-3F.F | 13 % |
| ECCP-30CF$_3$ | 8 % |

Beispiel 9

| | |
|---|---|
| PYRP-3OCF$_3$ | 10 % |
| PYRP-5OCF$_3$ | 11 % |
| PCH-5F | 14 % |
| CCP-2OCF$_3$ | 11 % |
| CCP-3OCF$_3$ | 14 % |
| CCP-4OCF$_3$ | 7 % |
| CCP-5OCF$_3$ | 12 % |
| ECCP-3F.F | 13 % |
| ECCP-3OCF$_3$ | 8 % |

Beispiel 10

| | |
|---|---|
| PYRP-3OCF$_3$ | 15 % |
| PYRP-3F | 13 % |
| PYRP-5F.F | 13 % |
| CCP-2OCF$_3$ | 8 % |
| CCP-3OCF$_3$ | 13 % |
| CCP-4OCF$_3$ | 5 % |
| CCP-5OCF$_3$ | 12 % |
| ECCP-3F.F | 13 % |
| ECCP-3OCF$_3$ | 8 % |

Beispiel 11

| | |
|---|---|
| PYRP-5CF$_3$ | 15 % |
| PCH-5F | 13 % |
| PYRP-5F.F | 13 % |
| CCP-2OCF$_3$ | 8 % |
| CCP-3OCF$_3$ | 13 % |
| CCP-4OCF$_3$ | 5 % |
| CCP-5OCF$_3$ | 12 % |
| ECCP-3F.F | 13 % |
| ECCP-3OCF$_3$ | 8 % |

Beispiel 12

| | | | |
|---|---|---|---|
| PDX-5F | 10 % | $T_c$: | 91 °C |
| PCH-7F | 10 % | Δn: | 0,084 |
| PDX-5F.F | 10 % | $V_{th}$: | 2,11 |
| CCP-30CF$_3$ | 13 % | η: | 17 |
| CCP-50CF$_3$ | 12 % | | |
| ECCP-30CF$_3$ | 10 % | | |
| ECCP-3F.F | 13 % | | |
| ECCP-5F.F | 10 % | | |
| CBC-33 | 4 % | | |
| CBC-53F | 4 % | | |
| CBC-55F | 4 % | | |

Beispiel 13

| | | | |
|---|---|---|---|
| PDX-5F.F | 16 % | $T_c$: | 64 °C |
| PCH-5F | 12 % | Δn: | 0,077 |
| CCP-20CF$_3$ | 8 % | $V_{th}$: | 1,50 |
| CCP-30CF$_3$ | 13 % | | |
| CCP-40CF$_3$ | 5 % | | |
| CCP-50CF$_3$ | 12 % | | |
| BCH-3F.F | 12 % | | |
| BCH-5F.F | 14 % | | |
| ECCP-2F.F | 8 % | | |

Beispiel 14

| | | | |
|---|---|---|---|
| PDX-5F | 12 % | $T_c$: | 91 °C |
| PDX-7F | 10 % | Δn: | 0,096 |
| PCH-7F | 5 % | $V_{th}$: | 1,93 |
| CCP-30CF$_3$ | 11 % | | |
| CCP-50CF$_3$ | 11 % | | |
| ECCP-3F.F | 12 % | | |
| ECCP-30CF$_3$ | 11 % | | |
| BCH-3F.F | 10 % | | |
| BCH-5F.F | 9 % | | |
| CBC-33F | 3 % | | |
| CBC-53F | 3 % | | |
| CBC-55F | 3 % | | |

Beispiel 15

| | | | |
|---|---|---|---|
| PDX-5F.F | 10 % | $T_c$: | 86 °C |
| PDX-5F | 10 % | Δn: | 0,085 |
| PCH-5Cl | 10 % | $V_{th}$: | 2,1 |
| CCP-3F.F | 13 % | | |
| CCP-5F.F | 12 % | | |
| ECCP-3OCF$_3$ | 10 % | | |
| ECCP-3F.F | 13 % | | |
| ECCP-5F.F | 10 % | | |
| CBC-33 | 4 % | | |
| CBC-53F | 4 % | | |
| CBC-55F | 4 % | | |

Beispiel 16

| | | | |
|---|---|---|---|
| PDX-5F.F | 10 % | $T_c$: | 70 °C |
| PCH-6F | 6 % | Δn: | 0,085 |
| PCH-7F | 15 % | $V_{th}$: | 1,7 V |
| CCP-2OCF$_3$ | 10 % | | |
| CCP-3OCF$_3$ | 11 % | | |
| CCP-5OCF$_3$ | 12 % | | |
| BCH-3F.F | 13 % | | |
| BCH-5F.F | 13 % | | |
| CP-3Cl.F | 10 % | | |

Beispiel 17

| | | | |
|---|---|---|---|
| PDX-5F.F | 9 % | $T_c$: | 74 °C |
| PCH-6F | 7 % | Δn: | 0,08 |
| PCH-7F | 7 % | $V_{th}$: | 1,7 V |
| CCP-2OCF$_3$ | 10 % | | |
| CCP-3OCF$_3$ | 12 % | | |
| CCP-4OCF$_3$ | 9 % | | |
| CCP-5OCF$_3$ | 12 % | | |
| BCH-3F.F | 6 % | | |
| ECCP-3F.F | 8 % | | |
| ECCP-5F.F | 6 % | | |
| BCH-3F.F.F | 14 % | | |

Beispiel 18

| | | | |
|---|---|---|---|
| PCH-7F | 7 % | $T_c$: | 79 °C |
| PCH-5F | 9 % | Δn: | 0,09 |
| PYRP-3OCF$_3$ | 3 % | $V_{th}$: | 1,7 V |
| PYRP-5OCF$_3$ | 4 % | | |
| CCP-2OCF$_3$ | 10 % | | |
| CCP-3OCF$_3$ | 12 % | | |
| CCP-4OCF$_3$ | 9 % | | |
| CCP-5OCF$_3$ | 12 % | | |
| BCH-3F.F | 6 % | | |
| ECCP-3F.F | 8 % | | |
| ECCP-5F.F | 6 % | | |
| BCH-3F.F.F | 14 % | | |

Beispiel 19

| | | | |
|---|---|---|---|
| PYRP-3OCF$_3$ | 5 % | $T_c$: | 78 °C |
| PYRP-5OCF$_3$ | 5 % | Δn: | 0,09 |
| PCH-6F | 6 % | $V_{th}$: | 1,7 V |
| PCH-5F | 15 % | | |
| CCP-2OCF$_3$ | 10 % | | |
| CCP-3OCF$_3$ | 11 % | | |
| CCP-5OCF$_3$ | 12 % | | |
| BCH-3F.F | 13 % | | |
| BCH-5F.F | 13 % | | |
| CP-3Cl.F | 10 % | | |

Beispiel 20

Eine Basismischung $M_o$ besteht aus

| | |
|---|---|
| ECCP-3Cl | 23 % |
| ECCP-5Cl | 33 % |
| ECCP-5Cl.F | 24 % |
| PCH-6F | 20 % |

Die erfindungsgemäßen Mischungen $M_1$ und $M_2$ bestehen aus 90 % Mo und 10 % PDX-3Cl ($M_1$) bzw. 10 % PYRP-1cl ($M_2$) Physikalische Parameter dieser Mischu: der folgenden Tabelle zu entnehmen.

| | $M_o$ | $M_1$ | $M_2$ |
|---|---|---|---|
| $T_c$ | 114 | 100 | 103,5 |
| Δn | 0,0946 | 0,0936 | 0,1087 |
| $V_{th}$ (90° TN-Zelle) | 3,79 | 3,23 | 3,20 |
| $V_{sat}$ | 5,14 | 4,57 | 4,48 |

Beispiel 21

| | | | |
|---|---|---|---|
| PDX-3F<br>PDX-5F<br>PDX-7F<br>$CCP-2OCF_3$<br>$CCP-3OCF_3$<br>$CCP-4OCF_3$<br>$CCP-5OCF_3$<br>BCH-3F.F.F<br>BCH-5F.F.F<br>$ECCP-3OCF_3$<br>$ECCP-5OCF_3$<br>CBC-33F<br>CBC-53F<br>CBC-55F | 10 %<br>8 %<br>6 %<br>8 %<br>10 %<br>7 %<br>10 %<br>12 %<br>10 %<br>5 %<br>5 %<br>3 %<br>3 %<br>3 % | $T_c$:<br>$\eta$:<br>$\Delta\epsilon$:<br>$\Delta n$: | -88 °C<br>22<br>+61<br>0,091 |

Beispiel 22

| | | | |
|---|---|---|---|
| PDX-3F<br>PDX-5F<br>PDX-7F<br>$CCP-3OCF_3$<br>$CCP-4OCF_3$<br>$CCP-5OCF_3$<br>CCP-3F.F.F<br>BCH-3F.F<br>BCH-5F.F<br>$ECCP-3OCF_3$<br>$ECCP-5OCF_3$<br>CBC-33F<br>CBC-53F<br>CBC-55F | 10 %<br>8 %<br>6 %<br>11 %<br>6 %<br>10 %<br>10 %<br>12 %<br>10 %<br>5 %<br>5 %<br>2 %<br>2 %<br>2 % | $T_c$:<br>$\eta$:<br>$\Delta\epsilon$:<br>$\Delta n$: | +89 °C<br>22<br>+6,0<br>0,092 |

Beispiel 27

| | | | |
|---|---|---|---|
| PCH-6F<br>PCH-JF<br>PYP-5F<br>$CCP-3OCF_3$<br>$CCP-5OCF_3$<br>ECCP-3F.F<br>BCH-3F.F<br>BCH-5F.F<br>BEP-3Cl.F<br>BEP-5Cl.F | 6 %<br>5 %<br>5 %<br>15 %<br>13 %<br>4 %<br>18 %<br>14 %<br>10 %<br>10 % | $T_c$:<br>$\Delta n$:<br>$V_{th}$: | 84 °C<br>0,127<br>2,25 (2nd Minimum) |

Beispiel 28

| | | | |
|---|---|---|---|
| PCH-6F | 6 % | $T_c$: | 84 °C |
| PYP-3Cl.F | 5 % | $\Delta n$: | 0,131 |
| PYP-5F | 5 % | $V_{th}$: | 2,2 ($2^{nd}$ Minimum) |
| CCP-3OCF$_3$ | 15 % | | |
| CCP-5OCF$_3$ | 13 % | | |
| ECCP-3F.F | 4 % | | |
| BCH-3F.F | 18 % | | |
| BCH-5F.F | 14 % | | |
| BEP-3Cl.F | 10 % | | |
| BEP-5Cl.F | 10 % | | |

## Patentansprüche

1. Flüssigkristallines Medium auf der Basis eines Gemisches von mittelpolaren Verbindungen, dadurch gekennzeichnet, daß es eine oder mehrere Verbindungen der allgemeinen Formel I

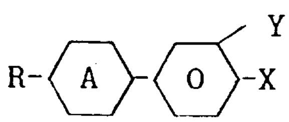

I

enthält, worin die einzelnen Reste die folgenden Bedeutungen haben:

R Alkyl, Oxaalkyl, Fluoralkyl oder Alkenyl mit jeweils bis zu 7 C-Atomen bedeutet,

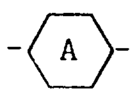 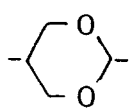 oder 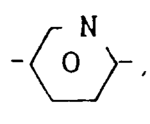,

X F, Cl, $OCHF_2$, $OCF_2Cl$ oder $OCF_3$,

Y H oder F,

und zusätzlich eine oder mehrere Verbindungen ausgewählt aus der Gruppe bestehend aus den allgemeinen Formeln II, III und IV und/oder V bis VIII enthält

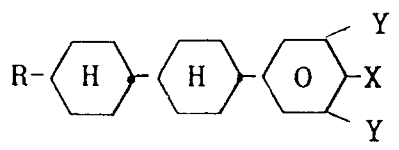

II

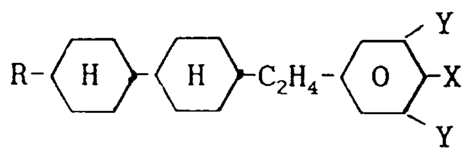

III

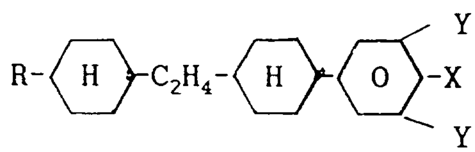

IV

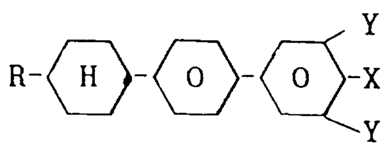

V

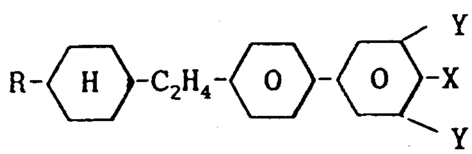

VI

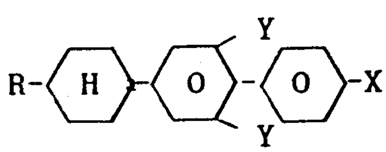

VII

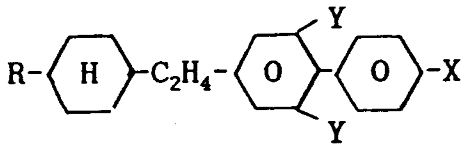

VIII

worin R, X und Y jeweils unabhängig voneinander eine der für Formel I angegebenen Bedeutung haben, wobei Medien enthaltend Verbindungen der Formel

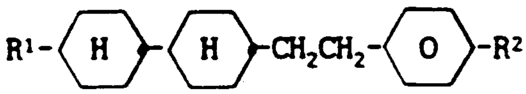

worin $R^1$ and $R^2$ jeweils unabhängig voneinander n-Alkyl, ω-Fluoralkyl oder n-Alkenyl mit bis zu 9 C-Atomen bedeuten, ausgeschlossen sind.

2. Medium nach Anspruch 1, dadurch gekennzeichnet, daß es zusätzlich eine oder mehrere Verbindungen ausgewählt aus der Gruppe bestehend aus der allgemeinen Formeln IX bis XII enthält:

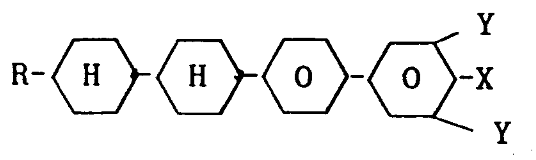

IX

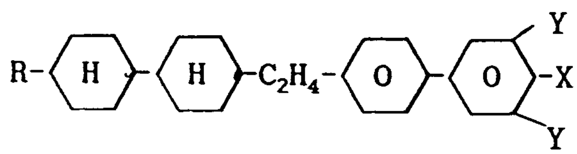

X

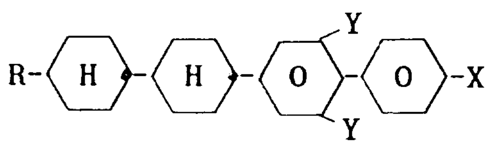

XI

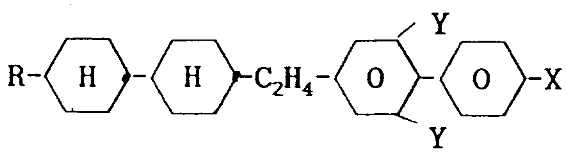

XII

worin R, X und Y jeweils unabhängig voneinander eine der in Anspruch 1 angegebene Bedeutung haben.

3. Medium nach Anspruch 1, dadurch gekennzeichnet, daß der Anteil an Verbindungen der Formeln I bis IV zusammen im Gesamtgemisch mindestens 50 Gew.-% beträgt.

4. Medium nach Anspruch 1 oder 2, dadurch gekennzeichnet, daß der Anteil an Verbindungen der Formel I im Gesamtgemisch 10 bis 50 Gew.-% beträgt.

5. Medium nach mindestens einem der Ansprüche 2 bis 4, dadurch gekennzeichnet, daß der Anteil an Verbindungen der Formeln II bis IV im Gesamtgemisch 40 bis 90 Gew.-% beträgt.

6. Medium nach mindestens einem der Ansprüche 1 bis 4, dadurch gekennzeichnet, daß es im wesentlichen aus Verbindungen ausgewählt aus der Gruppe bestehend aus den allgemeinen Formeln I bis XII besteht.

7. Verwendung des flussigkristallinen Mediums nach Anspruch 1 für elektrooptische Zwecke.

8. Elektrooptische Flüssigkristallanzeige enthaltend ein flüssigkristallines Medium nach Anspruch 1.

**Claims**

1. Liquid-crystalline media based on a mixture of medium-polarity compounds, characterized in that it contains one or more compounds of the general formula I

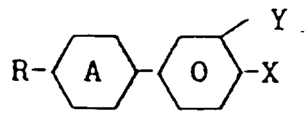

I

in which the individual radicals have the following meanings:

R is alkyl, oxaalkyl, fluoroalkyl or alkenyl, in each case having up to 7 carbon atoms,

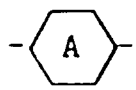 is 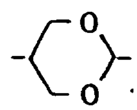 or 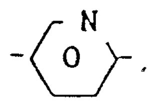

X is F, Cl, $OCHF_2$, $OCF_2Cl$ or $OCF_3$, and

Y is H or F,

and additionally contains one or more compounds selected from the group consisting of the general formulae II, III and IV and/or V to VIII:

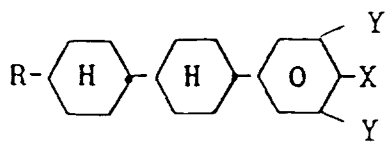

II

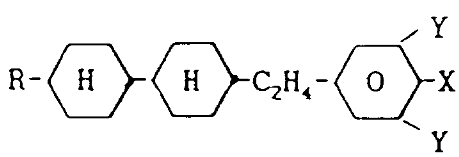

III

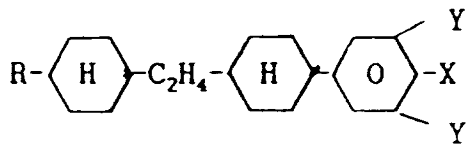

IV

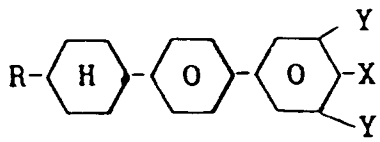

V

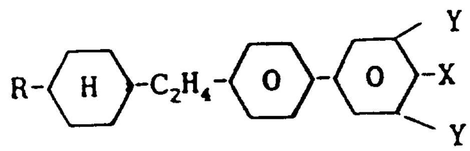

VI

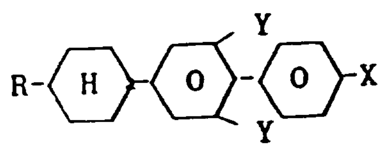

VII

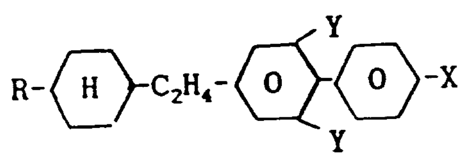

VIII

in which R, X and Y are each, independently of one another, as defined for formula I, media comprising compounds of the formula

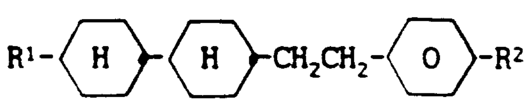

in which $R^1$ and $R^2$ are each, independently of one another, n-alkyl, ω-fluoroalkyl or n-alkenyl having up to 9 carbon atoms being excluded.

2. Medium according to Claim 1, characterized in that it additionally contains one or more compounds selected from the group consisting of the general formulae IX to XII:

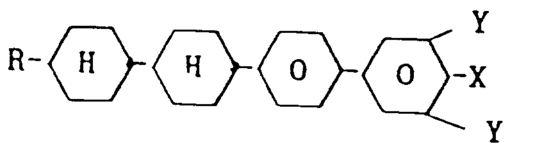

IX

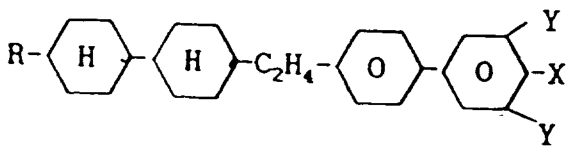

X

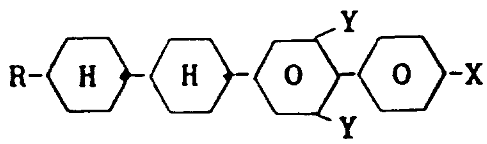

XI

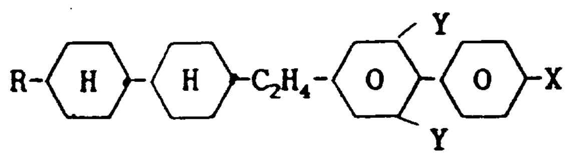

XII

in which R, X and Y are each, independently of one another, as defined in Claim 1.

3. Medium according to Claim 1, characterized in that the proportion of compounds of the formulae I to IV together is at least 50% by weight in the total mixture.

4. Medium according to Claim 1 or 2, characterized in that the proportion of compounds of the formula I is from 10 to 50% by weight in the total mixture.

5. Medium according to at least one of Claims 2 to 4, characterized in that the proportion of compounds of the formulae II to IV is from 40 to 90% by weight in the total mixture.

6. Medium according to at least one of Claims 1 to 4, characterized in that it essentially comprises compounds selected from the group consisting of the general formulae I to XII.

7. Use of the liquid-crystalline medium according to Claim 1 for electrooptical purposes.

8. Electrooptical liquid-crystal display containing a liquid-crystalline medium according to Claim 1.

**Revendications**

1. Milieu à cristaux liquides à base d'un mélange de composés de polarité moyenne, caractérisé en ce qu'il contient un ou plusieurs composés de formule générale I

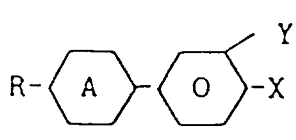

I

où les restes individuels ont les significations suivantes.

R représente un alkyle, un oxaalkyle, un fluoroalkyle ou un alcényle comportant chacun jusqu'à 7 atomes de C,

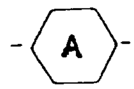 **représente** 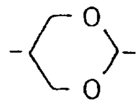 ou 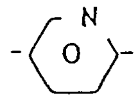

X représente F, Cl , $OCHF_2$, $OCF_2Cl$ ou $OCF_3$,

Y représente H ou F,

et en plus un ou plusieurs composés choisis dans le groupe constitué par les composés de formules générales II, III et IV et/ou V à VIII

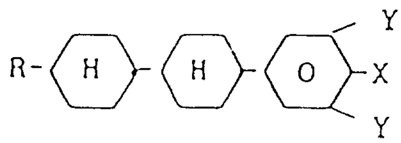

II

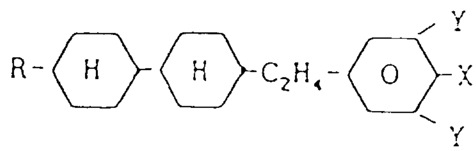

III

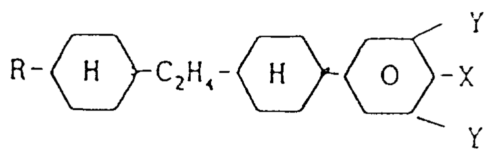

IV

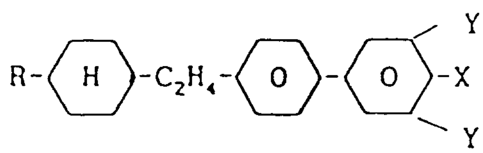

VI

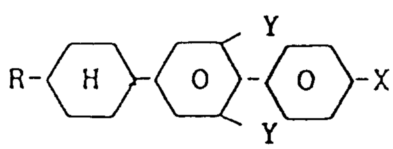

VII

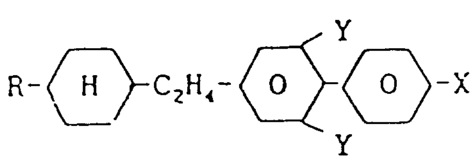

VIII

où R, X et Y ont, indépendamment les uns des autres, l'une des significations indiquées pour la formule I, le milieu contenant les composés de formule

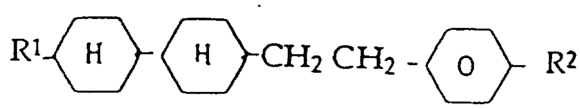

où $R^1$ et $R^2$ représentant, indépendamment l'un de l'autre, un n-alkyle, un ω-fluoroalkyle ou un n-alcényle ayant jusqu'à 9 atomes de C est exclus.

**2.** Milieu selon la revendication 1, caractérisé en ce qu'il contient en plus un ou plusieurs composés choisis dans le groupe constitué par les composés de formules générales IX à XII:

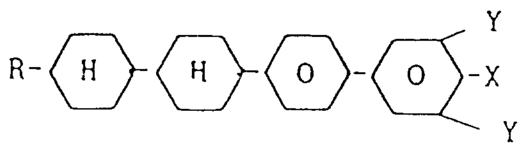

IX

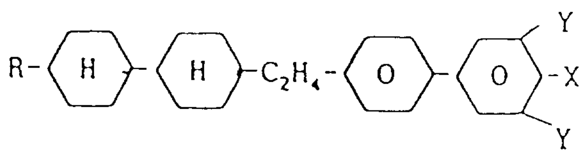

X

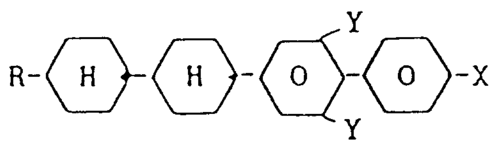

XI

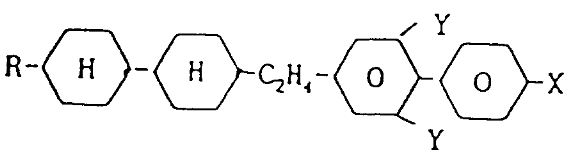

XII

où R, X et Y ont, indépendamment les uns des autres, l'une des significations indiquées dans la revendication 1.

**3.** Milieu selon la revendication 1, caractérisé en ce que la proportion en composés de formules I à IV dans le mélange total est d'au moins 50 % en poids.

**4.** Milieu selon la revendication 1 ou 2, caractérisé en ce que la proportion en composés de formule I dans le mélange total est comprise entre 10 et 50% en poids.

**5.** Milieu selon au moins l'une des revendications 2 à 4, caractérisé en ce que la proportion en composés de formules II à IV dans le mélange total est comprise entre 40 et 90 % en poids.

**6.** Milieu selon au moins l'une des revendications 1 à 4, caractérisé en ce qu'il est essentiellement constitué de composés choisis dans le groupe constitué des composés de formules générales I à XII.

**7.** Utilisation du milieu à cristaux liquides selon la revendication 1 à des fins électro-optique.

**8.** Dispositif d'affichage à cristaux liquides électro-optique contenant un milieu à cristaux liquides selon la revendication 1.